(19) Europäisches Patentamt
European Patent Office
Office européen des brevets

(11) **EP 1 450 606 B1**

(12) **EUROPEAN PATENT SPECIFICATION**

(45) Date of publication and mention
of the grant of the patent:
**16.02.2011 Bulletin 2011/07**

(51) Int Cl.:
***A01N 43/36*** *(2006.01)*

(21) Application number: **02788313.1**

(22) Date of filing: **25.11.2002**

(86) International application number:
**PCT/IB2002/005241**

(87) International publication number:
**WO 2003/045147 (05.06.2003 Gazette 2003/23)**

(54) **SYNERGISTIC SEED TREATMENT COMPOSITIONS**

SYNERGISTISCHE ZUSAMMENSETZUNGEN FÜR DIE BEHANDLUNG VON SAATGUT

COMPOSITIONS SYNERGISTIQUES DE TRAITEMENT DES SEMENCES

(84) Designated Contracting States:
**AT BE BG CH CY CZ DE DK EE ES FI FR GB GR IE IT LI LU MC NL PT SE SK TR**

(30) Priority: **27.11.2001 GB 0128390**

(43) Date of publication of application:
**01.09.2004 Bulletin 2004/36**

(73) Proprietor: **Syngenta Participations AG 4058 Basel (CH)**

(72) Inventor: **FORSTER, Birgit CH-4058 Basel (CH)**

(74) Representative: **Arunasalam, Velautha-Cumaran Syngenta Participations AG Intellectual Property P.O. Box 4058 Basel (CH)**

(56) References cited:
**EP-A- 0 630 569     EP-A- 1 038 441
WO-A-00/30440     WO-A-01/80643
WO-A-02/102148     FR-A- 2 754 424**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

The present invention relates to defined fungicidal mixtures for the treatment of plant propagation material and to methods of using such mixtures in crop protection.

WO 00/30440 describes combinations of defined pyrimidine-derivatives with one or more fungicides.

A mixture according to the invention consist essentialy of two fungicidally active components together with a suitable carrier material, wherein component I is I) fludioxonil (=4-(2,2-difluoro-1,3-benzodioxol-4-yl)pyrrole-3-carbonitrile; The Pesticide Manual, 12th. edition, 2000,361);
and wherein component II is

azoxystrobin (=methyl (E)-2-{2-[6-(2-cyanophenoxy)pyrimidin-4-yloxy)phenyl}-3-methoxyacrylate; The Pesticide Manual, 12th. edition, 2000, 49) wherein the ratio by weight of (I) to (II) is 2.5:1 to 1:15.

Further, the present invention provides synergistic mixtures comprising at least two active ingredient components, together with a suitable carrier wherein component (I) is fludioxonil and component (II) is picoxystrobin or kresoxim-methyl, wherein the ratio by weight of (I) to (II) is 2.5:1 to 1:15, with the proviso metalaxyl is absent.

The fungicidal mixtures according to the invention have very advantageous properties for protecting plants against disease infestation, particularly in the control and prevention of disease infestation on seed and soil.

These properties are for example the synergistically enhanced action of mixtures of components I and II, resulting in lower disease infestation, lower rates of application, a longer duration of action and altogether higher crop yields. Another property improved by the instant mixtures is summarized as plant vigor. Under the term plant vigor there are understood various sorts of improvements of plants which are not connected to the control of pests. For example such advantageous properties that may be mentioned are improved crop characteristics including: emergence, crop yields, protein content, more developed root system, tillering increase, increase in plant height, bigger leaf blade, less dead basal leaves, stronger tillers, greener leaf color, less fertilizer needed, less seeds needed, more productive tillers, earlier flowering, early grain maturity, less plant verse (lodging), increased shoot growth, increased plant stand and early germination; or any other advantages familiar to a person skilled in the art. Such enhancements were not to be expected from the activity of the individual components.

The weight ratio is selected as to give the desired, for example synergistic, action. Advantageous mixing ratios of the two active ingredients are 2.5:1, 1.25:1 1:6 by weight.

In some instances, the mentioned mixtures may be mixed with other pesticides, preferably fungicides, resulting in some cases In unexpected synergistic activities.

The active ingredient mixtures in question can be used as dressings In the treatment of plant propagation material, especially seed (fruit, tubers, grains) and plant cuttings (e.g. rice), to provide protection against fungus infections on the seed as well as against phytopathogenic fungi which occur in the soil. The active ingredient mixtures according to the invention are distinguished by the fact that they are especially well tolerated by plants and are environmentally friendly.

The active ingredient mixtures are effective against phytopathogenic fungi belonging to the following classes: Ascomycetes (e.g. Penicillium, Gaeumannomyces graminis); Basidiomycetes (e.g. the genus Hemileia, Rhizoctonia, Puccinia); Fungi imperfecti (e.g. Botrytis, Helminthosporium, Rhynchosporium, Fusarium, Septoria, Cercospora, Alternaria, Pyricularia and Pseudocercosporella herpotrichoides); Oomycetes (e.g. Phytophthora, Peronospora, Bremia, Pythium, Plasmopara).

Target crops for the areas of indication disclosed herein comprise within the scope of this invention e.g. the following species of plants: cereals (wheat, barley, rye, oats, corn, maize, rice, sorghum and related crops); beet (sugar beet and fodder beet); leguminous plants (beans, lentils, peas, soybeans); oil plants (rape, mustard, sunflowers,); cucumber plants (marrows, cucumbers, melons); fibre plants (cotton, flax, hemp, jute); vegetables (spinach, lettuce, asparagus, cabbages, carrots, onions, tomatoes, potatoes, paprika); as well as ornamentals (flowers, shrubs, broad-leaved trees and evergreens, such as conifers). This list does not represent any limitation.

The active ingredient mixtures according to the invention are especially advantageous for the treatment of plant propagation material, especially seeds, of cotton, corn, soybeans, rice and peanuts.

The mixtures of compounds I and II are normally used in the form of compositions. The compounds I and II can be applied to the plant propagation material to be treated either simultaneously or in succession at short interval, for example on the same day, if desired together with further carriers, surfactants or other application-promoting adjuvants customarily employed in formulation technology.

Suitable carriers and adjuvants can be solid or liquid and are the substances ordinarily employed in formulation technology, e.g. natural or regenerated mineral substances, solvents, dispersants, wetting agents, tackifiers, thickeners, binders or fertilizers.

In order to treat plant propagation material, especially seed, the compounds I and II can also be applied to the seeds (coating), either by impregnating the tubers or grains with a liquid formulation of each of the active ingredients in succession, or by coating them with an already combined wet or dry formulation.

The compounds of the combination are used in unmodified form or, preferably, together with the adjuvants conventionally employed in formulation technology, and are therefore formulated in known manner e.g. into emulsifiable concentrates, coatable pastes, directly sprayable or dilutable solutions, dilute emulsions, wettable powders, soluble powders, dusts, granules, or by encapsulation in e.g. polymer substances. As with the nature of the compositions, the methods of application, such as spraying, atomizing, dusting, scattering, coating or pouring, are chosen in accordance with the intended objectives and the prevailing circumstances. Advantageous rates of application of the active ingredient mixture are generally from 2 g to 35 g, preferably from 2 g to 20 g, per 100 kg of plant propagation material, especially seed. Preferred rates are from 1 g to 5 g, especially preferred 2.5 g, of compound I and 1 g to 30 g, especially preferred 1 g to 15 g, of compound II per 100 kg of plant propagation material, especially seed.

The formulations are prepared in known manner, e.g. by homogeneously mixing and/or grinding the active ingredients with extenders, e.g. solvents, solid carriers and, where appropriate, surface-active compounds (surfactants).

Suitable solvents are: aromatic hydrocarbons, preferably the fractions containing 8 to 12 carbon atoms, e.g. xylene mixtures or substituted naphthalenes, phthalates, such as dibutyl phthalate or dioctyl phthalate, aliphatic hydrocarbons, such as cyclohexane or paraffins, alcohols and glycols and their ethers and esters, such as ethanol, ethylene glycol, ethylene glycol monomethyl or monoethyl ether, ketones, such as cyclohexanone, strongly polar solvents, such as N-methyl-2-pyrrolidone, dimethyl sulfoxide or dimethylformamide, as well as vegetable oils or epoxidised vegetable oils, such as epoxidised coconut oil or soybean oil; or water.

The solid carriers used, e.g. for dusts and dispersible powders, are normally natural mineral fillers, such as calcite, talcum, kaolin, montmorillonite or attapulgite. In order to improve the physical properties it is also possible to add highly dispersed silicic acid or highly dispersed absorbent polymers. Suitable granulated adsorptive carriers are porous types, for example pumice, broken brick, sepiolite or bentonite, and suitable nonsorbent carriers are, for example, calcite or sand. In addition, a great number of pregranulated materials of inorganic or organic nature can be used, e.g. especially dolomite or pulverized plant residues.

Depending upon the nature of the compounds I and II to be formulated, suitable surface-active compounds are non-ionic, cationic and/or anionic surfactants having good emulsifying, dispersing and wetting properties. The term "surfactants" will also be understood as comprising mixtures of surfactants.

Particularly advantageous application-promoting adjuvants are also natural or synthetic phospholipids of the cephalin and lecithin series, e.g. phosphatidylethanolamine, phosphatidylserine, phosphatidylglycerol and lysolecithin.

The agrochemical compositions normally comprise 0.1 to 99 %, especially 0.1 to 95 %, compounds I and II, 99.9 to 1 %, especially 99.9 to 5 %, of a solid or liquid adjuvant and 0 to 25 %, especially 0.1 to 25 %, of a surfactant.

Whereas commercial products will preferably be formulated as concentrates, the end user will normally employ dilute formulations.

The Examples which follow serve to illustrate the invention, "active ingredient" denoting a mixture of compound I and compound II in a specific mixing ratio.

Formulation Examples

| Wettable powders | a) | b) | c) |
| --- | --- | --- | --- |
| active ingredient [I:II = 1:6(a), 1:2(b), 1:1(c)] | 25 % | 50 % | 75 % |
| sodium lignosulfonate | 5 % | 5 % | - |
| sodium lauryl sulfate | 3 % | - | 5 % |
| sodium diisobutylnaphthalenesulfonate | - | 6 % | 10 % |
| phenol polyethylene glycol ether (7-8 mol of ethylene oxide) | - | 2 % | - |
| highly dispersed silicic acid | 5 % | 10 % | 10 % |
| Kaolin | 62 % | 27 % | - |

The active ingredient is thoroughly mixed with the adjuvants and the mixture is thoroughly ground in a suitable mill, affording wettable powders which can be diluted with water to give suspensions of the desired concentration.

| Dusts | a) | b) | c) |
| --- | --- | --- | --- |
| active ingredient [I:II = 1:6(a), 1:2(b), 1:10(c)] | 5 % | 6 % | 4 % |
| Talcum | 95 % | - | - |
| Kaolin | - | 94 % | - |

(continued)

| Dusts | a) | b) | c) |
|---|---|---|---|
| mineral filler | - | - | 96 % |

Ready-for-use dusts are obtained by mixing the active ingredient with the carrier and grinding the mixture in a suitable mill. Such powders can be used for dry dressings for seed.

Suspension concentrate

| active ingredient (I:II = 1:8) | 40 % |
|---|---|
| propylene glycol | 10 % |
| nonylphenol polyethylene glycol ether | 6 % |
| (15 mol of ethylene oxide) | |
| sodium lignosulfonate | 10 % |
| carboxymethylcellulose | 1 % |
| silicone oil (in the form of a 75 % emulsion in water) | 1 % |
| water | 32 % |

The finely ground active ingredient is intimately mixed with the adjuvants, giving a suspension concentrate from which suspensions of any desired dilution can be obtained by dilution with water. Using such dilutions plant propagation material can be treated and protected against infestation by microorganisms, by spraying, pouring or immersion.

Biological Examples

A synergistic effect exists, for example, whenever the action of an active ingredient combination is greater than the sum of the actions of the individual components.

The action to be expected E for a given active ingredient combination obeys the so-called COLBY formula and can be calculated as follows (COLBY, S.R. "Calculating synergistic and antagonistic responses of herbicide combination". Weeds, Vol. 15, pages 20-22; 1967): ppm = milligrams of active ingredient (= a.i.) per litre of spray mixture

X = % action by active ingredient I using p ppm of active ingredient

Y = % action by active ingredient II using q ppm of active ingredient.

According to Colby, the expected (additive) action of active ingredients I+II using p+q ppm of active ingredient is $$E = X + Y - \frac{X \cdot Y}{100}$$

If the action actually observed (O) is greater than the expected action (E), then the action of the combination is superadditive, i.e. there is a synergistic effect.

A1) *Rhizoctonia solani/Cotton* (Damping off on Cotton)

A defined amount of mycelium of *R. solani* is blended with soil and trays are filled with the inoculated soil. The formulated test mixtures are applied to cotton seeds (cv. Sure Grow 747). The treated cotton seeds are then sown into the inoculated soil. Until germination the trays are stored at 20° C and a rel. humidity of 90% in the dark. After germination the trays are transferred to 25° C and a rel. humidity of 70% with a photoperiod of 14h. The evaluation is done by counting the emerged cotton plants and the number of emerged and diseased plants.

The mixtures I+IIA, I+IIB and I+IIC according to the instant invention show good synergistic action.

**Claims**

1. A synergistic mixture consisting essentially of two active ingredient components I and II, together with a suitable carrier, wherein component I is fludioxonil (= 4-(2,2-difluoro-1,3-benzodioxol-4-yl)pyrrole-3-carbonitrile), and wherein component II is azoxystrobin (=methyl (E)-2-{2-[6-(2-cyanophenoxy)pyrimidin-4-yloxy]phenyl}-3-methoxyacrylate), wherein the ratio by weight of I to II is 2.5:1 to 1:15.

2. Use of a mixture defined in claim 1 for control against one or more of Ascomycetes, Basidiomycetes, Fungi imperfecti, and Oomycetes.

3. A method of protecting plants against plant diseases by treating the plant propagation material with (i) a mixture defined in claim 1 or (ii) only component I and component II, as defined in claim 1, where the weight ratio of I to II is 2.5:1 to 1:15, in any desired sequence or simultaneously.

4. The method according to claim 3 wherein rates of I and II is from 2 to 35 grams per 100kg of plant propagation material.

5. The method according to either claim 3 or claim 4, wherein seed is treated.

6. The method according to claim 5, wherein seed of cotton, corn, soybeans, rice or peanuts is treated.

7. Plant propagation material which has been treated in accordance with any one of claims 3 to 6.

8. A synergistic mixture comprising at least two active ingredient components, together with a suitable carrier, wherein component I is fludioxonil (= 4-(2,2-difluoro-1,3-benzodioxol-4-yl)pyrrole-3-carbonitrile); and component II is picoxystrobin (= methyl (E)-3-methoxy-2-[2-(6-trifluoromethyl-2-pyridyloxymethyl)phenyl]acrylate), or kresoxim-methyl (= methyl (E)-methoxyimino[2-(o-tolyloxymethyl)phenyl]acetate, wherein the ratio by weight of I to II is 2.5:1 to 1:15, with the proviso metalaxyl is absent.

**Patentansprüche**

1. Synergistische Mischung, die im Wesentlichen aus zwei Wirkstoffkomponenten I und II gemeinsam mit einem geeigneten Träger besteht, wobei es sich bei Komponente I um Fludioxonil (= 4-(2,2-Difluor-1,3-benzodioxol-4-yl) pyrrol-3-carbonsäurenitril) handelt und wobei es sich bei Komponente II um Azoxystrobin (= (E)-2-{2-[6-(2-Cyanophenoxy)pyrimidin-4-yloxy]phenyl}-3-methoxy-acrylsäuremethylester) handelt, wobei das Gewichtsverhältnis von I zu II 2,5:1 bis 1:15 beträgt.

2. Verwendung einer Mischung wie in Anspruch 1 definiert für die Bekämpfung von einem oder mehreren aus der Reihe Ascomycetes, Basidiomycetes, Fungi imperfecti und Oomycetes.

3. Verfahren zum Schützen von Pflanzen gegen Pflanzenkrankheiten **dadurch**, dass man das pflanzliche Vermehrungsmaterial mit (i) einer Mischung wie in Anspruch 1 definiert oder (ii) nur Komponente I und Komponente II wie in Anspruch 1 definiert in einer beliebigen Reihenfolge oder gleichzeitig behandelt, wobei das Gewichtsverhältnis von I zu II 2,5:1 bis 1:15 beträgt.

4. Verfahren nach Anspruch 3, wobei die Aufwandmengen von I und II von 2 bis 35 Gramm pro 100 kg pflanzliches Vermehrungsmaterial betragen.

5. Verfahren nach Anspruch 3 oder Anspruch 4, wobei Saatgut behandelt wird.

6. Verfahren nach Anspruch 5, wobei Saatgut von Baumwolle, Mais, Sojabohnen, Reis oder Erdnüssen behandelt wird.

7. Pflanzliches Vermehrungsmaterial, das nach einem der Ansprüche 3 bis 6 behandelt worden ist.

8. Synergistische Mischung, die mindestens zwei Wirkstoffkomponenten gemeinsam mit einem geeigneten Träger umfasst, wobei es sich bei Komponente I um Fludioxonil (= 4-(2,2-Difluor-1,3-benzodioxol-4-yl)pyrrol-3-carbonsäurenitril) handelt und wobei es sich bei Komponente II um Picoxystrobin (= (E)-3-Methoxy-2-[2-(6-trifluormethyl-2-pyridyloxymethyl)phenyl]acrylsäuremethylester) oder um Kresoxim-Methyl (= (E)-Methoxyimino[2-(o-tolyloxymethyl]phenyl]essigsäuremethylester handelt, wobei das Gewichtsverhältnis von I zu II 2,5:1 bis 1:15 beträgt, mit der Maßgabe, dass kein Metalaxyl vorliegt.

**Revendications**

1. Mélange synergique constitué essentiellement de deux composants d'ingrédients actifs I et II, conjointement avec un véhicule convenable, où le composant I est le fludioxonil (= 4-(2,2-difluoro-1,3-benzodioxol-4-yl)pyrrole-3-carbonitrile) et où le composant II est l'azoxystrobine (= (E)-2-{2-[6-(2-cyanophénoxy)pyrimidin-4-yloxy]phényl}-3-méthoxy-acrylate de méthyle), où le rapport pondéral de I à II va de 2,5:1 à 1:15.

2. Utilisation d'un mélange défini selon la revendication 1, pour un contrôle contre un ou plusieurs parmi les Ascomycètes, les Basidiomycètes, les Fungi imperfecti et les Oomycètes.

3. Méthode de protection de plantes contre des maladies végétales, par le traitement du matériel de propagation végétal par (i) un mélange défini selon la revendication 1 ou (ii) seulement le composant I et le composant II, tels que définis selon la revendication 1, où le rapport pondéral de I à II va de 2,5:1 à 1:15, selon une séquence désirée quelconque ou simultanément.

4. Méthode selon la revendication 3, où les taux de I et II vont de 2 à 35 grammes pour 100 kg de matériel de propagation végétal.

5. Méthode selon la revendication 3 ou bien la revendication 4, dans laquelle on traite des semences.

6. Méthode selon la revendication 5, dans laquelle on traite des semences de coton, de maïs, de soja, de riz ou d'arachide.

7. Matériel de propagation végétal ayant été traité conformément à l'une quelconque des revendications 3 à 6.

8. Mélange synergique comprenant au moins deux composants d'ingrédients actifs, conjointement avec un véhicule convenable, où le composant I est le fludioxonil (= 4-(2,2-difluoro-1,3-benzodioxol-4-yl)pyrrole-3-carbonitrile) et le composant II est la picoxystrobine (= (E)-3-méthoxy-2-[2-(6-trifluorométhyl-2-pyridyloxyméthyl)phényl]acrylate de méthyle), ou le krésoxim-méthyle (= (E)-méthoxyimino[2-(o-tolyloxyméthyl]phényl]acétate de méthyle), où le rapport pondéral de I à II va de 2,5:1 à 1:15, à condition que le métalaxyl soit absent.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0030440 A

**Non-patent literature cited in the description**

- The Pesticide Manual. 2000, 361
- The Pesticide Manual. 2000, 49
- **COLBY, S.R.** Calculating synergistic and antagonistic responses of herbicide combination. *Weeds,* 1967, vol. 15, 20-22